# EUROPÄISCHE PATENTSCHRIFT

(11) **EP 2 116 319 B1**
(45) Veröffentlichungstag und Bekanntmachung des Hinweises auf die Patenterteilung: **14.09.2011**
(21) Anmeldenummer: 08008783.6
(22) Anmeldetag: 09.05.2008
(51) Int. Cl.: B22D 27/04, C30B 29/52, C30B 11/00, C30B 29/60, F01D 5/14, F01D 5/18, F01D 5/28

(54) **Gerichtet erstarrtes längliches Bauteil mit verschieden breiten Längskörnern**
Directionally solidified elongated component with elongated grains of differing widths
Composant oblong obtenu par solidification directionelle ayant différentes tailles transversales de grains longitudinaux

(43) Veröffentlichungstag der Anmeldung: 11.11.2009
(60) Teilanmeldung: 10004295.1
(73) Patentinhaber: SIEMENS AKTIENGESELLSCHAFT, 80333 München (DE)
(72) Erfinder: Ahmad, Fathi, 41564 Kaarst (DE); Krause, Stefan, 47803 Krefeld (DE); Lüsebrink, Oliver, Dr., 58456 Witten (DE)

(56) Entgegenhaltungen:
- EP-A- 0 066 971
- EP-A- 0 413 439
- WO-A-99/67435
- CA-A- 838 482
- GB-A- 2 030 233

## Beschreibung

Die Erfindung betrifft ein längliches Bauteil gemäß Anspruch 1.

Viele Bauteile zum Einsatz im Hochtemperaturbereich weisen eine einkristalline (SX) oder eine kolumnar (DS) erstarrte Struktur auf.
Dies führt zur weiteren Steigerung der mechanischen Festigkeit gegenüber einem ungerichtet erstarrten Bauteil (CC).

Kolumnar erstarrte Bauteile sind kostengünstiger herzustellen als einkristalline Bauteile.
Jedoch weisen diese gerichtet erstarrten Bauteile gegenüber einkristallinen Bauteilen Nachteile in der mechanischen Festigkeit auf.

Die GB 2 030 233 A zeigt eine Turbinenschaufel, die aus drei Einzelkristallen, die metallurgisch miteinander verbunden werden.

Die CA 838 482 A offenbart ein Gussbauteil einer Turbinenschaufel mit kolumnar erstarrten Körnern und globularen Körnern, wobei das Schaufelblatt aus globularen Körnern besteht.

Die EP 0 066 971 A2 offenbart ein Gussbauteil mit verschiedenen kristallographischen Orientierungen.

Es ist daher Aufgabe oben genanntes Problem zu überwinden.

Die Aufgabe wird gelöst durch ein Bauteil gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1 bis 6: verschieden Sichten eines Bauteils,
- Figur 7: ein Verfahren, um ein Bauteil herzustel- len,
- Figur 8: eine Gasturbine,
- Figur 9: perspektivisch eine Turbinenschaufel,
- Figur 10: perspektivisch eine Brennkammer und
- Figur 11: eine Liste von DS-Superlegierungen.

Die Figuren und die Beschreibung stellen nur Ausführungsbeispiele der Erfindung dar.

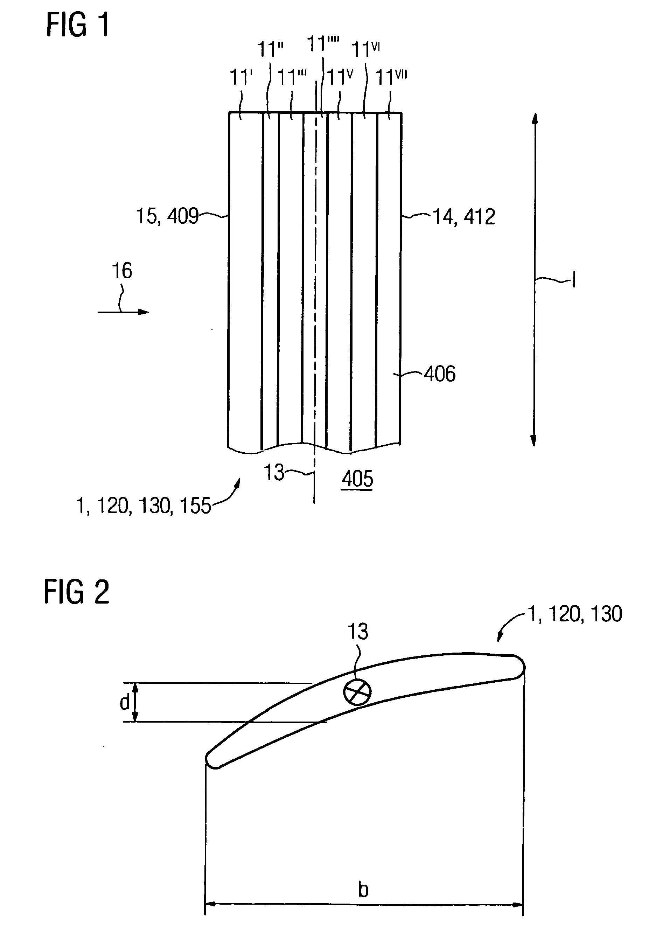

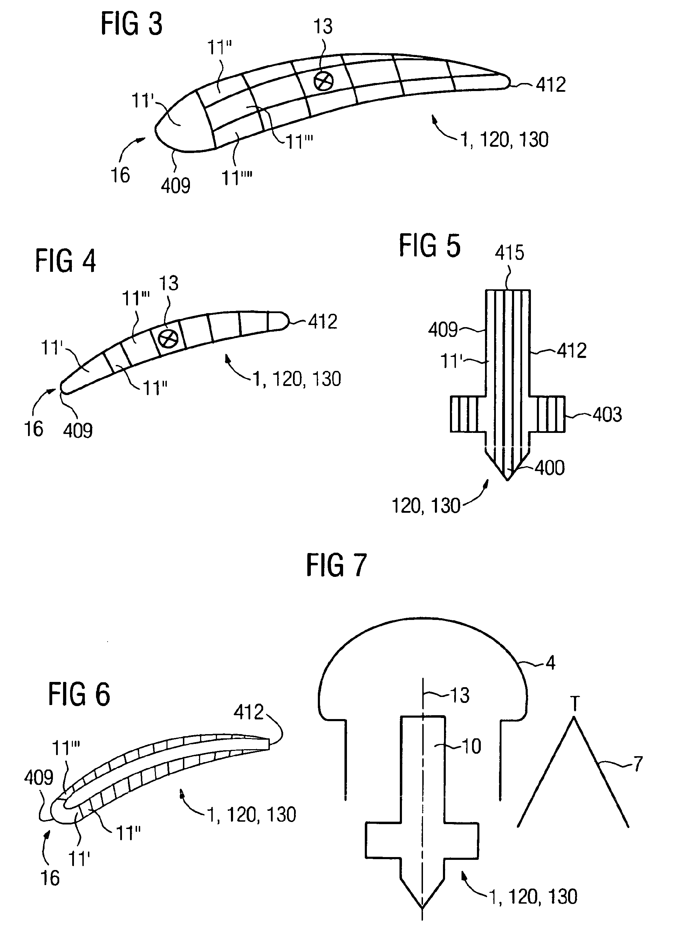

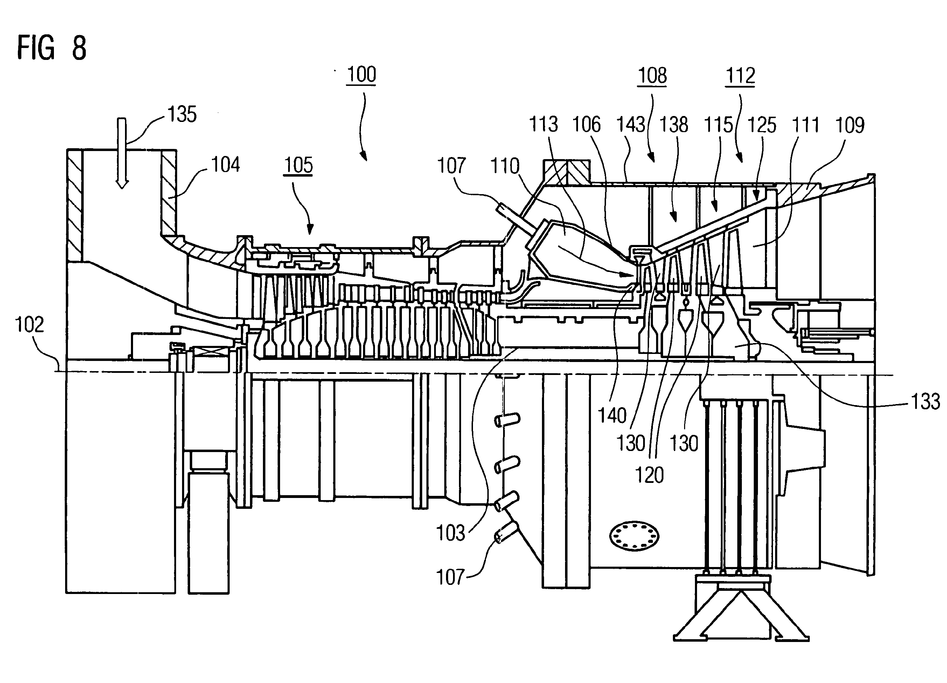

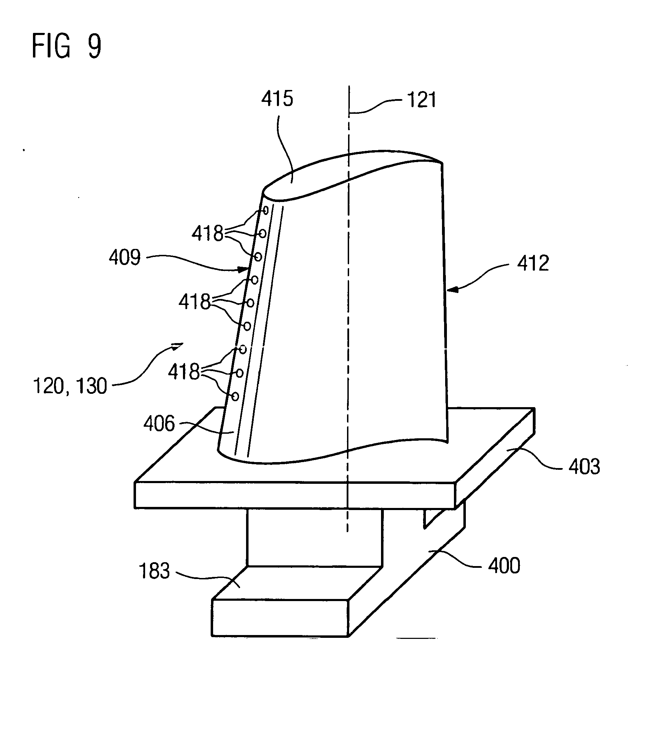

Figur 1 zeigt beispielhaft ein längliches Bauteil 1, 120, 130, 155.
Das längliche Bauteil 1, 120, 130, 155 weist eine Längsachse 13, 1 auf, entlang derer es sich erstreckt.
Die Breite b des Bauteils 1, 120, 130, 155 ist eine Ausdehnung senkrecht zur Längsachse 13 (Fig. 2). Die Breite b kann auch die Sehnenlänge einer Turbinenschaufel 120, 130 (Fig. 8, 9) sein.
Vorzugsweise ist das längliche Bauteil 1 eine Turbinenschaufel 120, 130, das von einem Medium in der Umströmungsrichtung 16, die senkrecht zur Längsachse 13 verläuft, umströmt wird. Die Erfindung wird nur beispielhaft anhand einer Turbinenschaufel 120, 130 erläutert.
Die Breite b der Turbinenschaufel 120, 130 ist hier die Ausdehnung in Strömungsrichtung 16 eines Mediums, das die Turbinenschaufel 1, 120, 130 umströmt (Fig. 3).
Die Dicke d der Turbinenschaufel 120, 130 verläuft senkrecht zur Strömungsrichtung 16 bzw. senkrecht zu der Breite b und der Länge 1.
Mit der Länge 1 ist die Länge von Längskörnern 11', 11" gemeint, nicht unbedingt die Länge des Bauteils 1, 120, 130, 155 (Fig. 8, 9, 10). Vorzugsweise ist die Länge 1 die Länge des länglichen Bauteils 1, 120, 130, 155.
Länglich bedeutet ein Längen/Breitenverhältnis 1/b > 3 oder Längen/Dickenverhältnisse 1/d von mindestens 5, insbesondere von 10.
Das längliche Bauteil 1, 120, 130, 155 weist längs der Längsachse 13 Längskörner 11', 11'',... auf, ganz insbesondere besteht das Bauteil 1 zu 90% aus Längskörnern 11', 11'', ..., insbesondere zu 100%.
Ein Längskorn 11', 11'', ... ist quasi ein Einkristall.

Das längliche Bauteil 1, 120, 130, 155 ist durch ein Gussverfahren hergestellt, so dass die Längskörner 11', 11'', ... durch Korngrenzen miteinander verbunden sind.

Das längliche Bauteil 1 weist eine Vorderkante 15, 409 und eine Hinterkante 14, 412 auf.

Im Fall der Turbinenschaufel 120, 130 weist zumindest ein Turbinenblatt 406 (Fig. 8) die kolumnaren Körner 11', 11'', 11''', ... auf.
Vorzugsweise besteht das Schaufelblatt 406 nur aus kolumnar erstarrten Körnern 11', 11'', 11''', .... Die oben genannten Längen/Breitenverhältnisse bzw. Längen/Dickenverhältnisse beziehen sich dann hier vorzugsweise nur auf das Turbinenblatt 406.

Die Turbinenschaufel 120, 130 weist mehrere kolumnar erstarrte Längskörner 11', 11'', ... auf, die sich längs der Längsachse 13 erstrecken.
Vorzugsweise weist das längliche Bauteil 1, 120, 130, 155 mindestens drei, insbesondere sechs oder ganz insbesondere zwölf Längskörner 11', 11'', ... auf.
Vorzugsweise sind es maximal 60 Längskörner 11', 11'', 11''', ..., ganz insbesondere maximal 50 Längskörner 11', 11'', ....

Die Längskörner 11', 11'', ..., weisen quer zur Längsachse 13 verschiedene Kornbreiten auf. Einige Längskörner 11', 11'', 11''', 11'''' können gleich breit sein.
Vorzugsweise weist das erste Längskorn 11' an einer Kante 15, 409, das von einem Medium angeströmt wird, die größte Kornbreite a' oder den größten Kornquerschnitt auf. Die nachfolgenden Körner 11'', 11''', ..., weisen keine größere Breite a', a", ... auf, können jedoch höchstens teilweise auch genau so breit sein.
Dabei sind vorzugsweise höchstens die Hälfte der Längskörner 11'', 11''', ... genauso breit wie das erste Längskorn 11'. Vorzugsweise sind die restlichen Längskörner 11'', 11''' kleiner in der Kornbreite.

Mit "Kante" kann auch eine Vorderseite eines länglichen Bauteils 1 oder einer Turbinenschaufel 120, 130 gemeint sein. Mit dem Begriff "Kornbreite" kann auch die Querschnittsfläche eines Längskorns 11', 11'' gemeint sein. Maximale Kornbreite bedeutet dann entsprechend maximale Querschnittsfläche des Korns.

Vorzugsweise weist das erste Längskorn 11' eine Kornbreite a' von 5mm bis 60mm auf.
Die anderen Längskörner 11'', 11''', ... können breiter ausgebildet sein als das erste Längskorn 11'.

Somit liegen im Bereich der höchsten mechanischen Belastung des Bauteils keine Korngrenzen vor.

Die Turbinenschaufel 120, 130 weist dabei vorzugsweise eine Breite b (längs einer Strömungsrichtung) von 70mm bis 300mm auf.
Die Turbinenschaufel 120, 130 weist dabei vorzugsweise eine Länge von 100mm (1. Stufe) bis 500mm (3. Stufe) auf.

Erfindungsgemäß beträgt die Kornbreite a' des ersten Längskorns 11' an einer Kante 15, 409 des Bauteils 1, 120, 130, 155 mindestens 20% der Breite b des Bauteils 1, 120, 130, 155. Andere Längskörner 11'', 11''', ... können genauso breit oder breiter sein.

Als Spezialfall wird das erste Korn 11' eines Bauteils 1, 120, 130 breiter ausgeführt als die anderen, bei dem das Breiten/Dickenverhältnis b/d (aspect ratio) größer 2, insbesondere größer 5 ist.

Vorzugsweise weist das gesamte Schaufelblatt 406 Längskörner 11', 11'', ..., auf. Weiterhin vorzugsweise erstrecken sich die Längskörner 11', 11'', ... zumindest bis in die Schaufelplattform 403 hinein, insbesondere über die Schaufelplattform 403 oder darüber hinaus (Fig. 5).

Insbesondere bei dem Übergang zwischen Schaufelblatt 406 und Schaufelplattform 403 ist ein breites Korn 11' vorhanden.

Die Anzahl der Längskörner 11', 11'', ... ist vorzugsweise an der Schaufelspitze 415 am größten und kann sich zum Befestigungsbereich 400 verringern (nicht dargestellt), da einzelne Längskörner 11' , 11'', ... auf Kosten anderer wachsen.

Der Schaufelfuß 400 kann auch anders orientierte Körner aufweisen. Die Länge 1 ist dann hier die Länge des Schaufelblatts 406. Zu der Länge der Turbinenschaufel 120, 130 kommt dann noch die Ausdehnung des Befestigungsbereichs 400 in Längsrichtung 13 hinzu.
Vorzugsweise weist der Befestigungsbereich 400 auch nur längliche Körner 11', 11'', ... auf, also 1 = gesamte Länge der Turbinenschaufel 120, 130.

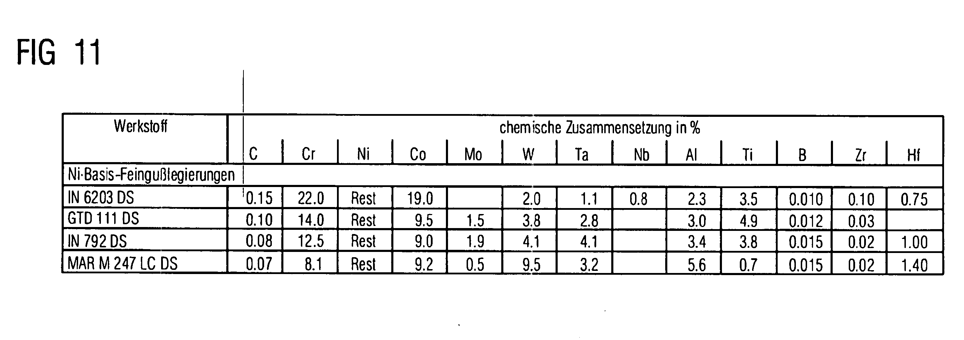

Die Turbinenschaufel 120, 130 weist vorzugsweise eine DS-Superlegierung gemäß Figur 11 auf,
aber auch CM 247 LC DS
sowie vorzugsweise eine Legierung umfassend (in Gew%)
11.94% Cr
4.03% Ti
1.84% Mo
3.75% W
5.15% Ta
3.55% Al
8.93% Co
0.008% B
0.02% Zr
0.06% C 0.01% Hf
Rest Nickel
mit Tantalkarbid (0.4 vol% to 1.5 vol%) als Sekundärphase oder vorzugsweise aufweisend:

| | | |
|---|---|---|
| Cr | 11.60 | bis 12.70 % |
| Ti | 3.90 | bis 4.25 % |
| Mo | 1.65 | bis 2.15 % |
| W | 3.50 | bis 4.10 % |
| Ta | 4.80 | bis 5.20 % |
| Al | 3.40 | bis 3.80 % |
| Co | 8.50 | bis 9.50 % |
| B | 0.0125 | bis 0.0175 % |
| C | 0.08 | bis 0.10 % |
| Ni | | Rest. |

In Figur 3 sind die Längskörner 11', 11'', ... wie in Figur 2 im Querschnitt gezeigt.

Die Längskörner 11', 11'', ... können in Strömungsrichtung 16 nebeneinander und hintereinander vorhanden sein.

In Figur 4 sind die Längskörner 11', 11'', ... hintereinander in Strömungsrichtung 16 vorhanden.
Entsprechendes gilt jeweils für eine Wand einer Turbinenschaufel 120, 130 oder eines Hohlbauteils (Fig. 6).

Vorzugsweise wird die Kante 15, 409, also quasi die Vorderseite des Bauteils 120, 130, nur von diesem Längskorn 11' gebildet.

Vorzugsweise ist das Bauteil 1 eine Turbinenschaufel 120, 130 und hat dabei einzelne oder kombinierte Eigenschaften der folgenden Auflistung: Die Turbinenschaufel hat
- mindestens drei,
   insbesondere mindestens sechs,
   ganz insbesondere mindestens zwölf,
   Längskörner (11' , -11'', ...) ,
- ein Längskorn (11') an der Kante (15, 409) senkrecht zur Längsachse (13), das eine Kornbreite von 5mm bis 60mm, ganz insbesondere 10mm bis 60mm, ganz insbesondere 5mm bis 40mm, aufweist,
- senkrecht zur Längsachse (13) eine Breite (b) von 70mm bis 300mm, insbesondere von 100mm bis 250mm,
- eine Länge (1) und eine Breite (b), insbesondere des Schaufelblattes 406, wobei
   das Längen/Breitenverhältnis (1/b) > 3 beträgt,
- eine Länge (1) und eine Dicke (d), insbesondere des Schaufelblatts 406,
   wobei das eine Längen/Dickenverhältnis (1/d) > 5, insbesondere > 10, beträgt,
- ein Längskorn (11'), das von einem Medium in einer Strömungsrichtung (16) unter einem von 0° verschiedenen Winkel,
   insbesondere senkrecht zur Längsachse (1, 13) umströmt wird,
   und wobei das breiteste oder das querschnittsgrößte Längskorns (11') das am ersten angeströmt Längskorn (11') darstellt,
- eine Breite (b) und eine Dicke (d), insbesondere des Schaufelblatts 406,
   wobei das Breiten/Dickenverhältnis (b/d) von > 2, insbesondere > 5,
   ganz insbesondere > 10,
   beträgt,
- maximal 50 Längskörner (11' , 11'', ...),
- ein Längskorn (11'), das eine Mindestkornbreite von 5mm aufweist,
- mindestens 90% gegossen hergestellte Längskörner (11', 11'', ...),
- eine Kornbreite des Längskorns (11') an der Kante (15, 409), das maximal 50% der Breite (b) des Bauteils (1, 120, 130, 155) beträgt,
- eine Kornbreite des Längskorns (11') an einer Kante (15, 409), das mindestens 20% der Breite (b) des Bauteils (1, 120, 130, 155) beträgt,
- ein Schaufelblatt,
   bei dem sich die Längskörner (11' , 11'', ...) zumindest über das ganze Schaufelblatt (406) erstrecken,
- eine Schaufelplattform (403),
   bei dem die Längskörner (11', 11'', ...) sich zumindest teilweise bis in eine Schaufelplattform (403) erstrecken,
   insbesondere zumindest über die Schaufelplattform (403) hinaus,
- ein Schaufelblatt (406),
   das senkrecht zur Längsachse (13) eine Breite (b) von 70mm bis 200mm beträgt,
   insbesondere von 100mm bis 200mm,
   ganz insbesondere von 120mm bis 130mm,

In Figur 7 ist beispielhaft dargestellt, wie eine solche Turbinenschaufel 120, 130 hergestellt wird.

Bekannt aus dem Stand der Technik ist durch Heizer 4 ein Temperaturgradient längst der Längsachse 13 einzurichten, wobei die Turbinenschaufel beispielhaft von Schaufelspitze zum Schaufelfuß 400 verläuft, so dass die tiefste Temperatur an der Schaufelspitze 415 ausgeprägt ist und das Bauteil 1 durch einen Temperaturgradienten 7 gezogen wird.

Durch zusätzliche Heizer auf der einen Seite, wo das breite Längskorn 11' ausgebildet werden soll, wird erreicht, dass das erste Längskorn 11' an der Kante 13, 409 breiter ausgebildet wird.

Ebenso können ein oder mehrere Keimbildner verwendet werden, um die Breite des Längskorns 11' gezielt einzustellen.

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 9 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufein 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverf ahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

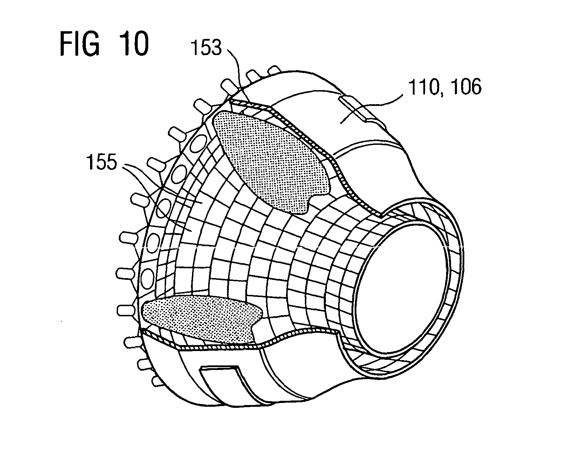

Die Figur 10 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Längliches Bauteil (1, 120, 130, 155),
das eine Längsachse (1, 13) aufweist,
das längs der Längsachse (1, 13) mehrere stängelkristallin gerichtet erstarrte Längskörner (11', 11'', ...) aus einer Nickelbasissuperlegierung aufweist,
wobei die Längskörner (11' , 11'', ...) quer zur Längsachse (13) Kornbreiten aufweisen,
wobei die Längskörner (11', 11'', ...) verschiedene Kornbreiten aufweisen,
wobei es eine maximale Kornbreite der Längskörner (11', 11'', ...) gibt,
**dadurch gekennzeichnet, dass**
zumindest das Längskorn (11') an einer Kante (15, 409) des Bauteils (1, 120, 130, 155) die maximale Kornbreite aufweist, und
bei dem das Bauteil (1, 120, 130, 155) senkrecht zur Längsachse (13) eine Breite (b) von 70mm bis 300mm aufweist,
insbesondere von 100mm bis 250mm,
wobei die Breite (b) des Bauteils (1, 120, 130, 155) die Summe der Kornbreiten der Längskörner (11', 11'', 11''', ...) ist.

2. Längliches Bauteil nach Anspruch 1,
das mindestens drei,
insbesondere mindestens sechs,
ganz insbesondere mindestens zwölf,
Längskörner (11', 11'', ...) aufweist.

3. Längliches Bauteil nach Anspruch 1 oder 2,
bei dem das Längskorn (11') an der Kante (15, 409) senkrecht zur Längsachse (13) eine Kornbreite von 5mm bis 60mm, ganz insbesondere 10mm bis 60mm,
ganz insbesondere 5mm bis 40mm,
aufweist.

4. Längliches Bauteil nach Anspruch 1,
das eine Länge (1) und eine Breite (b) aufweist und
das ein Längen/Breitenverhältnis (1/b) von > 3 aufweist.

5. Längliches Bauteil nach Anspruch 2 oder 3,
das eine Länge (1) und eine Dicke (d) aufweist,
das eine Längen/Dickenverhältnis (1/d) > 5,
insbesondere > 10,
aufweist.

6. Längliches Bauteil nach Anspruch 1,
das von einem Medium in einer Strömungsrichtung (16) unter einem von 0° verschiedenen Winkel,
insbesondere senkrecht zur Längsachse (1, 13) umströmt wird,
und wobei das breiteste oder das querschnittsgrößte Längskorn (11') das am ersten angeströmte Längskorn (11') darstellt.

7. Bauteil nach Anspruch 1, 4, 5 oder 6,
das eine Breite (b) und eine Dicke (d) aufweist,
das ein Breiten/Dickenverhältnis (b/d) von > 2, insbesondere > 5,
ganz insbesondere > 10,
aufweist.

8. Bauteil nach Anspruch 1, 2 oder 7,
das maximal 60 Längskörner (11', 11'', ...),
insbesondere maximal 50 Längskörner (11', 11'', ...), aufweist.

9. Bauteil nach Anspruch 1, 7 oder 8,
bei dem das Längskorn (11') eine Mindestkornbreite von 5mm aufweist.

10. Bauteil nach Anspruch 1, 7, 8 oder 9,
das ein Gussteil ist und mindestens zu 90% aus Längskörnern (11' , 11'', ...) besteht.

11. Bauteil nach Anspruch 1, 7, 8, 9 oder 10,
bei dem die Kornbreite des Längskorns (11') an der Kante (15, 409) des Bauteils (1, 120, 130, 155) maximal 50% der Breite (b) des Bauteils (1, 120, 130, 155) beträgt.

12. Bauteil nach Anspruch 1,
die Kornbreite des Längskorns (11') an einer Kante (15, 409) des Bauteils (1, 120, 130, 155) mindestens 20% der Breite (b) des Bauteils (1, 120, 130, 155) beträgt.

13. Bauteil nach Anspruch nach einem oder mehreren der Ansprüche 1 bis 12,
das als eine Turbinenschaufel (120, 130) ausgebildet ist.

## Claims

1. Elongate component (1, 120, 130, 155),
which has a longitudinal axis (1, 13),
and which has a plurality of longitudinal grains (11', 11'', ...) composed of a nickel-based superalloy directionally solidified in a rod-crystalline form along the longitudinal axis (1, 13), the longitudinal grains (11', 11'', ...) having grain widths transverse to the longitudinal axis (13),
the longitudinal grains (11', 11'', ...) having different grain widths,
there being a maximum grain width of the longitudinal grains (11', 11", ...)
**characterized in that**
at least the longitudinal grain (11') on an edge (15, 409) of the component (1, 120, 130, 155) has the maximum grain width, and wherein the component (1, 120, 130, 155) has a width (b) of from 70 mm to 300 mm, in particular from 100 mm to 250 mm, perpendicularly to the longitudinal axis (13),
the width (b) of the component (1, 120, 130, 155) being the sum of the grain widths of the longitudinal grains (11', 11'', 11'''_{,} ...).

2. Elongate component according to Claim 1,
which has at least three,
in particular at least six,
more particularly at least twelve
longitudinal grains (11', 11'', ...).

3. Elongate component according to Claim 1 or 2,
wherein the longitudinal grain (11') on the edge (15, 409) has a grain width of from 5 mm to 60 mm,
more particularly from 10 mm to 60 mm,
more particularly from 5 mm to 40 mm,
perpendicularly to the longitudinal axis (13).

4. Elongate component according to Claim 1,
which has a length (1) and a width (b), and
which has a length/width ratio (1/b) of > 3.

5. Elongate component according to Claim 2 or 3,
which has a length (1) and a thickness (d), and
which has a length/thickness ratio (1/d) of > 5,
in particular > 10.

6. Elongate component according to Claim 1,
around which a medium flows in a flow direction (16) at an angle not equal to 0°,
in particular perpendicularly to the longitudinal axis (1, 13), and wherein the longitudinal grain (11') which is widest or has the largest cross section represents the longitudinal grain (11') receiving the flow first.

7. Component according to Claim 1, 4, 5 or 6,
which has a width (b) and a thickness (d), and
which has a width/thickness ratio (b/d) of > 2,
in particular > 5,
more particularly > 10.

8. Component according to Claim 1, 2 or 7,
which has at most 60 longitudinal grains (11', 11'', ...),
in particular at most 50 longitudinal grains (11', 11'', ...).

9. Component according to Claim 1, 7 or 8,
wherein the longitudinal grain (11') has a minimum grain width of 5 mm.

10. Component according to Claim 1, 7, 8 or 9,
which is a cast part, more than 90% of which consists of longitudinal grains (11', 11'', ...).

11. Component according to Claim 1, 7, 8, 9 or 10,
wherein the grain width of the longitudinal grain (11') on the edge (15, 409) of the component (1, 120, 130, 155) is at most 50% of the width (b) of the component (1, 120, 130, 155).

12. Component according to Claim 1,
wherein the grain width of the longitudinal grain (11') on an edge (15, 409) of the component (1, 120, 130, 155) is at least 20% of the width (b) of the component (1, 120, 130, 155).

13. Component according to one or more of Claims 1 to 12, which is designed as a turbine blade (120, 130).

## Revendications

1. Elément ( 1, 120, 130, 155 ) oblong,
qui a un axe ( 1, 13 ) longitudinal,
qui a le long de l'axe (1, 13) longitudinal plusieurs grains ( 11', 11'', ... ) longitudinaux en un superalliage à base de nickel à cristallisation en colonne et solidifiés directionnellement,
dans lequel les grains ( 11', 11'', ... ) longitudinaux ont des largeurs s'étendant transversalement à l'axe (13) longitudinal,
dans lequel les grains ( 11', 11'', ... ) longitudinaux ont des largeurs différentes,
dans lequel il y a une largeur maximum des grains ( 11', 11'', ... ) longitudinaux,
**caractérisé en ce que**
au moins le grain ( 11' ) longitudinal sur un bord ( 15, 409 ) de l'élément ( 1, 120, 130, 155 ) a la largeur maximum,
et
dans lequel l'élément (1, 120, 130, 155) a perpendiculairement à l'axe ( 13 ) longitudinal une largeur ( b ) de 70mm à 300mm, notamment de 100mm à 250mm,
dans lequel la largeur ( b ) de l'élément (1, 120, 130, 155 ) est la somme des largeurs des grains ( 11', 11'', ... ) longitudinaux.

2. Elément oblong suivant la revendication 1,
qui a au moins trois,
notamment au moins six,
de manière tout à fait particulière au moins douze,
grains ( 11', 11'', ... ) longitudinaux.

3. Elément oblong suivant la revendication 1 ou 2,
dans lequel le grain ( 11' ) longitudinal a sur le bord ( 15, 409) perpendiculairement à l'axe (13) longitudinal une largeur de 5mm à 60mm,
tout à fait particulièrement de 10m à 60mm,
tout à fait particulièrement de 5mm à 40mm.

4. Elément oblong suivant la revendication 1,
qui a une longueur ( 1 ) et une largeur ( b ) et
qui a un rapport ( 1/b ) de la longueur à la largeur > 3.

5. Elément oblong suivant la revendication 2 ou 3,
qui a une longueur ( 1 ) et une épaisseur ( d ),
qui a un rapport ( 1/d ) de la longueur à l'épaisseur > 5, notamment > 10.

6. Elément oblong suivant la revendication 1,
devant lequel passe un fluide dans une direction (16) d'écoulement sous un angle différent de 0°,
notamment perpendiculairement à l'axe ( 1, 13 ) longitudinal, et dans lequel le grain ( 11' ) longitudinal le plus large ou de section transversale la plus grande constitue le premier grain ( 11' ) longitudinal auquel arrive l'écoulement.

7. Elément oblong suivant la revendication 1, 4, 5 ou 6,
qui a une largeur ( b ) et une épaisseur ( d ),
qui a un rapport ( b/d ) de la largeur à l'épaisseur > 2, notamment > 5,
tout particulièrement > 10.

8. Elément oblong suivant la revendication 1, 2 ou 7,
qui a au maximum 60 grains ( 11', 11'', ... ) longitudinaux, notamment au maximum 50 grains (11', 11'', ... ) longitudinaux.

9. Elément oblong suivant la revendication 1, 7 ou 8,
dans lequel le grain ( 11' ) longitudinal a une largeur minimum de 5mm.

10. Elément oblong suivant la revendication 1, 7, 8 ou 9,
qui est une pièce coulée et qui est constitué pour au moins 90 ô de grains ( 11', 11'', ... ) longitudinaux.

11. Elément oblong suivant la revendication 1, 7, 8, 9 ou 10, dans lequel la largeur du grain ( 11' ) longitudinal au bord ( 15, 409 ) de l'élément ( 1, 120, 130, 155 ) représente au maximum 50% de la largeur ( b ) de l'élément ( 1, 120, 130, 155 ).

12. Elément oblong suivant la revendication 1,
dans lequel la largeur du grain ( 11' ) longitudinal au bord ( 15, 409 ) de l'élément ( 1, 120, 130, 155 ) représente au maximum 20% de la largeur ( b ) de l'élément ( 1, 120, 130, 155 ).

13. Elément oblong suivant l'une ou plusieurs des revendications 1 à 12,
qui est constitué sous la forme d'une aube ( 120, 130 ) de turbine.
